**Europäisches Patentamt**

**European Patent Office**

**Office européen des brevets**

(19)

(11) Publication number: **0 232 188 B1**

(12)

# EUROPEAN PATENT SPECIFICATION

(45) Date of publication of patent specification :
**05.06.91 Bulletin 91/23**

(51) Int. Cl.$^5$ : **G05D 23/19, B60H 1/00**

(21) Application number: **87301104.3**

(22) Date of filing : **09.02.87**

(54) Device for controlling the capacity of a compressor.

(30) Priority : **07.02.86 JP 24217/86**

(43) Date of publication of application :
**12.08.87 Bulletin 87/33**

(45) Publication of the grant of the patent :
**05.06.91 Bulletin 91/23**

(84) Designated Contracting States :
**DE FR GB IT SE**

(56) References cited :
**EP-A- 0 043 668**
**EP-A- 0 102 397**
**EP-A- 0 194 029**
**DE-A- 3 526 518**
**US-A- 4 482 007**

(73) Proprietor : **SANDEN CORPORATION**
**20 Kotobuki-cho**
**Isesaki-shi Gunma-ken (JP)**

(72) Inventor : **Sato, Motoharu**
**3 11 38 Ojimaminami**
**Honjo-shi Saitama 367 (JP)**

(74) Representative : **Brunner, Michael John et al**
**GILL JENNINGS & EVERY 53-64 Chancery**
**Lane**
**London WC2A 1HN (GB)**

# Description

The present invention relates to a device for controlling the capacity of a variable type compressor in an automobile air conditioning system, and more particularly, to a device which controls the capacity of the compressor in accordance with the air conditioning load.

Generally, the air conditioning system of an automobile is driven by the vehicle engine through an electromagnetic clutch. The air conditioning system is designed to achieve a predetermined air conditioning performance of a predetermined air conditioning load when the automobile is driven at an average speed. This, when the vehicle engine is idling or is being driven at lower speeds, the rotational speed of the compressor is correspondingly low. Therefore, the performance of the air conditioning system is adversely effected. On the other hand, when the vehicle is driven at high speeds, the rotational speed of the compressor is too high for efficient performance. Thus, electromagnetic clutches are used to control the rotational speed of the compressor under varying drive speeds by intermittently stopping and starting the compressor.

However, there are many problems associated with continuously cycling the clutch on and off. For example, when the engine is driven at high speeds and the capacity of the air conditioning system is large, it is necessary for the electromagnetic clutch to be turned on and off frequently. Therefore, large loads sufficient to drive the compressor are intermitently applied to the engine. On the other hand, at low speed or when the vehicle engine is idling, the compressor is not sufficiently driven to maintain the desired temperature in the vehicle.

In order to solve the above mentioned problems, a system which controls the capacity of a compressor by detecting the temperature at the outlet side of the air conditioning system evaporator is proposed in published Japanese Application No. JP-A-58-30. In such a system, the performance of the air conditioning system is not directly detected. For example, even though the temperature inside the vehicle may be high, the capacity of the air conditioning system is reduced when the temperature at the outlet side of the evaporator becomes lower than a predetermined temperature. Thus, the capacity of the system is insufficient to cool the vehicle. In addition, when the vehicle is running, the capacity of the air conditioning system is changed frequently, thereby placing great stress and strain on the air conditioning system.

It is a primary object of this invention to provide a device for controlling the capacity of a variable type compressor in an automotive air conditioning system in order to provide a more reliable and durable system than those known in the prior art.

It is another object of this invention to provide a device for controlling the capacity of a variable type compressor in an automotive air conditioning system wherein the outlet temperature of the air is changed slightly even if the driving condition of the compressor is changed drastically.

The above objects of this invention are achieved by providing a control device which includes a first temperature detecting sensor disposed forward of the evaporator for detecting a first air temperature at the inlet side of the evaporator, a second temperature detecting sensor disposed behind the evaporator for detecting a second air temperature at the outlet side of the evaporator, a third temperature detecting sensor for detecting a third air temperature at the outside of a compartment, and a control unit. The control unit compares the detected air temperature with predetermined temperatures and controls the capacity of the compressor in accordance with compared results.

Further objects, features and advantages of this invention will be understood from the following detailed description of the preferred embodiments of the invention with reference to the attached drawings.

Figure 1 is a block diagram of the air conditioning system ;

Figure 2 is a graph illustrating the relationship between a medium air conditioning load and a medium vehicle speed ;

Figure 3 is a graph illustrating the relationship between a low air conditioning load in air mixed mode.

Figure 4 is a flow chart illustrating the operation of the control system.

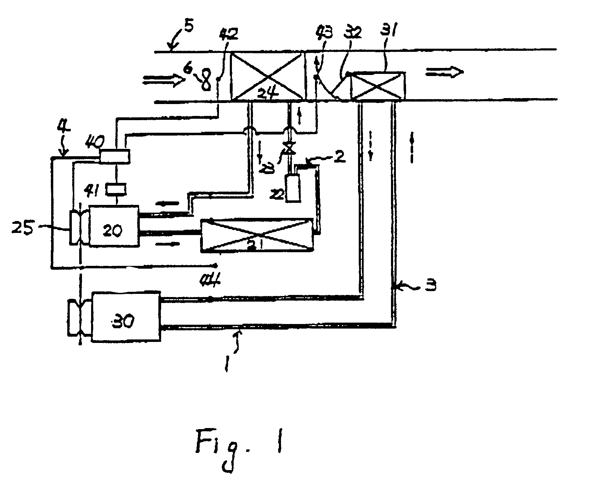

Referring to Figure 1, there is shown an automotive air conditioning system which is driven by an engine 30. The air conditioning system comprises a compressor 20, condenser 21, receiver-dryer 22, expansion valve 23 and evaporator 24 connected in series with one another. The compressor 20 is a variable capacity mechanism, the capacity of which can be varied by operating a capacity control mechanism 41 on a signal from a control unit 40. Where the compressor 20 is of the scroll type, the capacity changing mechanism 41 comprises an electromagnetic bypass valve which connects the inlet of the compressor to the intermediate fluid pockets through an intermediate chamber as shown in US-A-4468178. Also, the operation of the compressor 20 is controlled by an electromagnetic clutch 25 mounted on the compressor 20 which operates the signal from the control unit 40.

As shown in Figure 1, the evaporator 24 is disposed in a duct 5. A first sensor 42 is disposed at the inlet side of the evaporator 24 and a second sensor 43 is disposed at the outlet side of the evaporator 24. A third sensor 44 is disposed on the exterior of the automobile. The three sensors 42, 43 and 44 are connected to the control unit 40 which compares the detected temperature values with predetermined values and then sends appropriate capacity control signals to the capacity control mechanism 41 to effect a change in the capacity of the compressor 20 or to start or stop the operation of the compressor 20 through the electromagnetic clutch 25.

A heater 31 disposed in the duct 5 is connected to the engine 30 and receives coolant from the engine 30 for heating the vehicle when the outside temperature is cold. A damper 32 disposed forward of the heater 31 controls the temperature of the discharged air by control of the angle of its opening. A blower 6 is also disposed forward of the evaporator 24, and the air introduced into the duct 5 is forced by the blower 6 and discharged into the vehicle compartment.

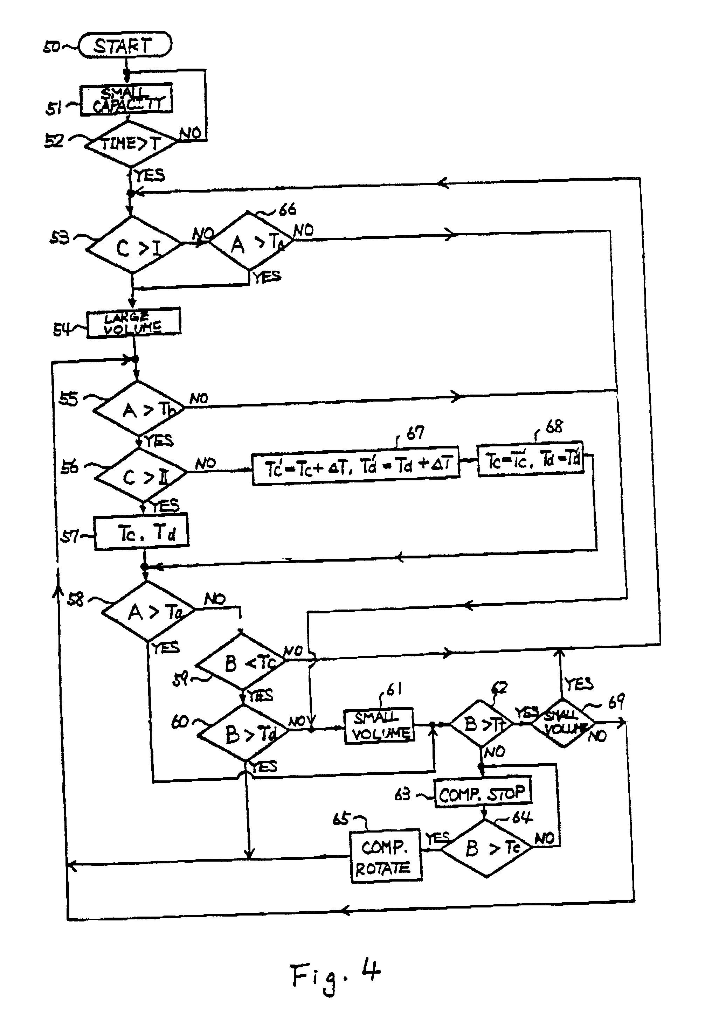

With reference to Figure 4, there is shown a flowchart which illustrates the operation of the control unit 40.

When the air conditioning system is turned on in step 50 the compressor 20 is operated at a predetermined low capacity (step 51). After the air conditioning system has been operated for a predetermined time T (step 52), control passes to step 53 which sets a comparator mechanism to compare the air temperature C at the outside of the vehicle compartment with a predetermined temperature I. When air temperature C is higher than predetermined temperature I, step 53 proceeds to step 54 which sets the capacity control mechanism 40 to operate the compressor 20 with a large volume. Otherwise, if air temperature C is lower than the predetermined temperature I, step 53 proceeds to step 66 which sets a comparator mechanism to compare the air temperature A at the inlet side of the evaporator 24 with a predetermined temperature Ta. When the air temperature A is higher than the predetermined temperature Ta, step 66 proceeds to step 54, i.e. compressor 20 is operated with a large volume. Otherwise, if temperature A is lower than first predetermined temperature Ta, step 66 proceeds to step 61 which sets the capacity control mechanism 40 to operate the compressor 20 with a small volume.

Step 55 sets a comparator mechanism to compare the air temperature A with a second predetermined temperature Tb. When air temperature A is higher than the second predetermined temperature Tb, step 55 proceeds to step 56. Otherwise, if the air temperature A is lower than the second predetermined temperature Tb, step 55 proceeds to step 61 which sets the capacity control mechanism 40 to operate the compressor 20 with a small volume.

Step 56 sets a comparator mechanism to compare the air temperature C at the exterior of the vehicle with a comparison predetermined temperature II. When air temperature C is higher than comparison predetermined temperature II, step 56 proceeds to step 57 which sets the values of predetermined temperatures Tc, Td as third and fourth predetermined temperatures. Otherwise, step 56 proceeds to steps 67, 68 which sets values Tc, Td of third and fourth predetermined temperatures. At step 67, values Tc', Td' are produced by adding an incremental value $\Delta T$ to Tc, Td respectively and, at step 68, the values of Tc, Td are made equal to Tc' and Td' as third and fourth predetermined temperatures.

Steps 57 and 68 proceed to step 58 which sets the comparator mechanism to compare the air temperature A with the first predetermined temperature Ta. When the air temperature A is higher than the first predetermined temperature Ta, step 58 proceeds to step 62 which sets the comparator mechanism to compare the air temperature B at the outlet side of the evaporator 24 with a fifth predetermined temperature Tf. Otherwise, step 58 proceeds to step 59 which sets the comparator mechanism to compare the air temperature B with the third predetermined temperature Tc, and step 59 proceeds to step 60 which sets the comparator mechanism to compare the air temperature B with the fourth predetermined temperature Td. Otherwise, step 59 proceeds back to step 53.

When the air temperature B is higher than the fourth predetermined temperature Td, step 60 proceeds to step 61 which sets the capacity control mechanism 40 to operate the compressor 20 with a small volume.

Step 61 proceeds to step 62 which sets the comparator mechanism to compare the air temperature B with the fifth predetermined temperature Tf. When the air temperature B is higher than the fifth predetermined temperature Tf, step 62 proceeds to step 69 which sets a detecting device to detect whether the compressor 20 is operating with a large volume or not. When the compressor 20 is operating with a large volume, step 69 proceeds back to step 53. Otherwise, step 69 proceeds back to step 55. When air temperature B is not higher than the fifth predetermined temperature Tf, step 62 proceeds to step 63 which sets a stop mechanism to stop the operation of the compressor 20.

Step 63 proceeds to step 64 which sets the comparator mechanism to compare the air temperature B with a sixth predetermined temperature Te. When the air temperature B is higher than the sixth predetermined temperature Te, step 64 proceeds to step 65 which again drives the compressor 20, and then step 65 proceeds back to step 55. Otherwise, step 64 proceeds back to step 63, and compressor 20 continues to remain stopped until air temperature B exceeds the sixth predetermined temperature Te.

In this example, changing the volume of the compressor 20 is not confined to two steps. Although the third predetermined temperature Tc is required to be higher than the fourth predetermined temperature Td and the sixth predetermined temperature Te needs to be higher than the fifth predetermined temperature Tf, the height of each of the third, fourth, fifth and sixth predetermined temperatures does not need to be fixed.

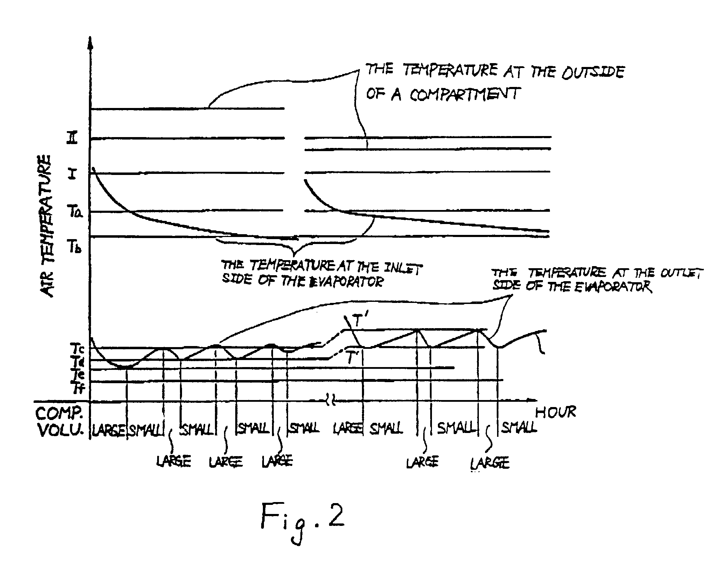

Referring to Figure 2, where is shown a graph illustrating the changes in the air temperature B in relation to compressor volume, air temperature A at the inlet side of evaporator 24, and air temperature C at the outside of the compartment.

When air temperature A at the inlet side of the evaporator 24 is higher than the first predetermined temperature Ta, the compression volume of the compressor 20 is maintained large. On the other hand, when the air temperature A at the inlet side of the evaporator 24 is below the second predetermined temperature Tb, the compression volume of the compressor 20 is maintained small. Also, when the air temperature A is changed within the range between the first predetermined temperature Ta and the second predetermined temperature Tb, the compression volume of the compressor 20 is changed in accordance with changes of air temperature B at the outlet side of evaporator the 24. The third predetermined temperature Tc is predetermined to be higher than the fourth predetermined temperature Td.

When air temperature C at the outside of the compartment changes within the range between the comparison predetermined temperatures I, II, predetermined temperatures Tc, Td for varying the compression volume of the compressor 20 are changed into predetermined temperatures Tc', Td', and thus, the proportion of the operation of the compressor with a small compression volume to that with a large volume is increased. Predetermined temperatures Tc, Td are changed into predetermined temperatures Tc', Td' by incrementing them by ΔT as described above.

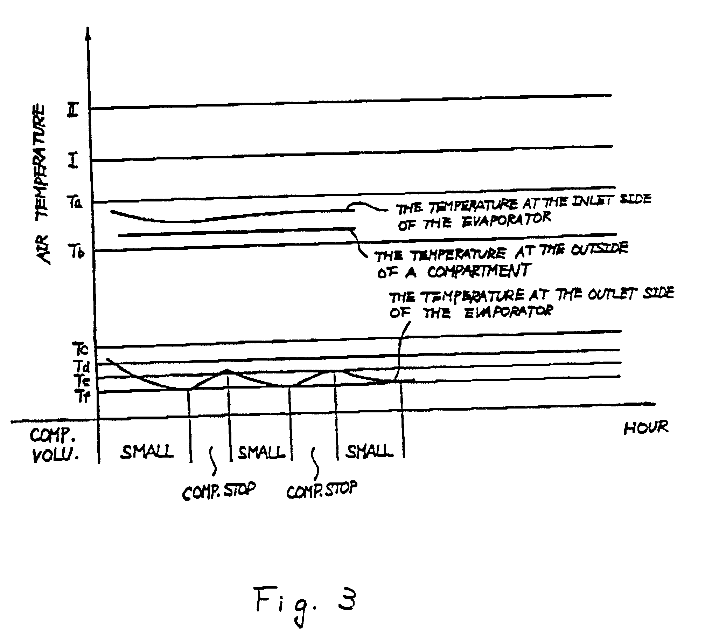

Referring to Figure 3, there is shown the condition for variable control when the air conditioning load is low. In this example, an air conditioning system is operated in air mixed mode in which air which is cooled with an evaporator and air which is heated in a heater are mixed in an air duct. Such a mode is mainly used for decreasing humidity for air in a compartment in winter and with circulation of air within the compartment, the air temperature A at the inlet side of evaporator 24 is controlled so as to be higher than the air temperature C. The sixth predetermined temperature Te is predetermined to be higher than the fifth predetermined temperature Tf.

In such a condition, when air temperature C at the outside of a compartment is lower than the comparison predetermined temperature I and the air temperature A at the inlet side of the evaporator 24 is lower than the first predetermined temperature Ta, the compression volume of compressor 20 is maintained small. When the air temperature A at the outlet side of the evaporator 24 is below the fifth predetermined temperature Tf, an electromagnetic clutch 25 mounted on the compressor 20 stops operation. When the air temperature B is higher than the sixth predetermined temperature Te, the electromagnetic clutch 25 is turned on, and compressor 20 is started, for operation with a small compression volume.

## Claims

1. A device for controlling the capacity of a variable capacity compressor (20) having an evaporator (24) and a compressor capacity changing means (41), the device comprising ;

first temperature detecting means (43) adjacent the evaporator inlet for detecting a first air temperature (B) at an outlet side of the evaporator ;

second temperature detecting means (42) for detecting a second air temperature (A) at an outlet side of the evaporator ;

third temperature detecting means (44) disposed for detecting a third air temperature (C) at the outside of a compartment ; and

control means (40) for controlling the capacity changing means (41), the control means including

first comparison means (53) for comparing a first predetermined comparison temperature (I) with the third air temperature (C) and providing a first control signal when the third air temperature (C) is higher than the first predetermined comparison temperature (I), the capacity changing means (41) changing the capacity of the compressor to a large capacity (54) in response to the first control signal,

second comparison means (66) for comparing a first predetermined temperature (Ta) with the second air temperature (A) in response to the comparison by the first comparison means (53) and the absence of the first control signal, the second comparison means (66) providing a second control signal when the second air temperature (A) is higher than the first predetermined temperature (Ta), in response to the second control signal the capacity changing means (41) changing the capacity of the compressor to a large capacity (54) and in the absence of the second control signal the capacity changing means (41) changing the capacity of said compressor to a small capacity (61),

third comparison means (55) for comparing a second predetermined temperature (Tb) with the second air temperature (A) and providing a third control signal when the second air temperature (A) is higher than the second predetermined temperature (Tb), the capacity changing means (41) changing the capacity of the compressor to a small capacity (61) in the absence of the third control signal,

fourth comparison means (56) for comparing a second predetermined comparison temperature (II) with the third air temperature (C) in response to the comparison by the third comparison means (55) and the presence of the third control signal and providing a fourth control signal when the third air temperature (C) is higher than the second predetermined comparison temperature (II), in response to the fourth control signal third (Tc) and fourth (Td) predetermined temperatures are set and in the absence of the fourth control signal a fifth predetermined temperature (Tc′) is set which is an incremented value of the third predetermined temperature (Tc) and a sixth predetermined temperature (Td′) is set which is an incremented value of the fourth predetermined temperature (Td),

fifth comparison means (58) for comparing the first predetermined temperature (Ta) with the second air temperature (A) and providing a fifth control signal when the second air temperature (A) is higher than the first predetermined temperature (Ta),

sixth comparison means (59) for comparing the third predetermined temperature (Tc) with the first air temperature (B) in response to the comparison by the fifth comparison means (58) and the absence of the fifth control signal, the sixth comparison means (59) providing a sixth control signal when the third predetermined temperature (Tc) is higher than the first air temperature (B),

seventh comparison means (60) for comparing the fourth predetermined temperature (Td) with the first air temperature (B) in response to the comparison by the sixth comparison means (59) and the presence of the sixth control signal, the seventh comparison means (60) providing a seventh control signal when the first air temperature (B) is higher than the fourth predetermined temperature (Td), the capacity changing means (41) changing the capacity of the compressor to a small capacity (61) in the absence of the seventh control signal,

eighth comparison means (62) comparing an eighth predetermined temperature (Tf) with the first air temperature (B) and providing an eighth control signal when the first air temperature (B) is higher than the eighth predetermined temperature (Tf), the compressor (20) being turned off in the absence of the eighth control signal, and

ninth comparison means (64) comparing a seventh predetermined temperature (Te) with the first air temperature (B) in response to the comparison by the eighth comparison means (64) and the absence of the eighth control signal, the ninth comparison means (64) providing a ninth control signal when the first air temperature (B) is higher than the seventh predetermined temperature (Te), in the presence of the ninth control signal the compressor (20) being turned on and in the absence of the ninth control signal the compressor (20) being turned off.

2. The device of claim 1, wherein the control means further includes determination means (69) for determining whether the compressor (20) is operating with a small capacity in response to the comparison by the eighth comparison means (63) and the presence of the eighth control signal, the determination means providing a tenth control signal when the compressor (20) is operating with a small capacity.

3. The device of claim 2, wherein in response to the determination by the determination means (69) and the presence of the tenth control signal, the first comparison means (53) is controlled to make the comparison between the first predetermined comparison temperature (I) and the third air temperature (C).

4. The device of claim 2, wherein in response to the determination by the determination means (69) and the absence of the tenth control signal, the third comparison means (55) is controlled to make the comparison between the second predetermined temperature (Tb) and the second air temperature (A).

5. The device of claim 1, wherein in response to the comparison by the fifth comparison means (58) and the presence of the fifth control signal, the eighth comparison means (62) is controlled to make the comparison between the eighth predetermined temperature (Tf) and the first air temperature (B).

6. The device of claim 1, wherein in response to the comparison by the sixth comparison means (59) and the absence of the sixth control signal, the first comparison means (53) is controlled to make the comparison between the first predetermined comparison temperature (I) and the third air temperature (C).

7. The device of claim 1, wherein in response to the comparison by the seventh comparison means (60) and the presence of the seventh control signal, the third comparison means (55) is controlled to make the comparison between the second predetermined temperature (Tb) and the second air temperature (A).

8. The device of claim 1, wherein in response to the comparison by the ninth comparison means (64) and the presence of the ninth control signal, the third comparison means (55) is controlled to make the comparison between the second predetermined temperature (Tb) and the second air temperature (A).

9. A method of controlling the capacity of a variable capacity compressor (20) having an evaporator (24) and a compressor capacity changing means (41), using a device according to claim 1, the method comprising :

comparing in the first comparison means (53) a first predetermined comparison temperature (I) with the third air temperature (C) and providing a first control signal when the third air temperature (C) is higher than the first predetermined comparison temperature (I), the capacity changing means (41) changing the capacity of the compressor to a large capacity (54) in response to the first control signal,

comparing in the second comparison means (66) a first predetermined temperature (Ta) with the second air temperature (A) in response to the comparison by the first comparison means (53) and the absence of the first control signal, the second comparison means (66) providing a second control signal when the second air temperature (A) is higher than the first predetermined temperature (Ta), in response to the second control signal the capacity changing means (41) changing the capacity of the compressor to a large capacity (54) and in the absence of the second control signal the capacity changing means (41) changing the capacity of said compressor to a small capacity (61),

comparing in the third comparison means (55) a second predetermined temperature (Tb) with the second air temperature (A) and providing a third control signal when the second air temperature (A) is higher than the second predetermined temperature (Tb), the capacity changing means (41) changing the capacity of the compressor to a small capacity (61) in the absence of the third control signal,

comparing in the fourth comparison means (56) a second predetermined comparison temperature (II) with the third air temperature (C) in response to the comparison by the third comparison means (55) and the presence of the third control signal and providing a fourth control signal when the third air temperature (C) is higher than the second predetermined comparison temperature (II), in response to the fourth control signal third (Tc) and fourth (Td) predetermined temperatures are set and in the absence of the fourth control signal a fifth predetermined temperature (Tc') is set which is an incremented value of the third predetermined temperature (Tc) and a sixth predetermined temperature (Td') is set which is an incremented value of the fourth predetermined temperature (Td),

comparing in the fifth comparison means (58) the first predetermined temperature (Ta) with the second air temperature (A) and providing a fifth control signal when the second air temperature (A) is higher than the first predetermined temperature (Ta),

comparing in the sixth comparison means (59) the third predetermined temperature (Tc) with the first air temperature (B) in response to the comparison by the fifth comparison means (58) and the absence of the fifth control signal, the sixth comparison means (59) providing a sixth control signal when the third predetermined temperature (Tc) is higher than the first air temperature (B),

comparing in the seventh comparison means (60) the fourth predetermined temperature (Td) with the first air temperature (B) in response to the comparison by the sixth comparison means (59) and the presence of the sixth control signal, the seventh comparison means (60) providing a seventh control signal when the first air temperature (B) is higher than the fourth predetermined temperature (Td), the capacity changing means (41) changing the capacity of the compressor to a small capacity (61) in the absence of the seventh control signal,

comparing in the eighth comparison means (62) an eighth predetermined temperature (Tf) with the first air temperature (B) and providing an eighth control signal when the first air temperature (B) is higher than the eighth predetermined temperature (Tf), the compressor (20) being turned off in the absence of the eighth control signal, and

comparing in the ninth comparison means (64) a seventh predetermined temperature (Te) with the first air temperature (B) in response to the comparison by the eighth comparison means (64) and the absence of the eighth control signal, the ninth comparison means (64) providing a ninth control signal when the first air temperature (B) is higher than the seventh predetermined temperature (Te), in the presence of the ninth control signal the compressor (20) being turned on and in the absence of the ninth control signal the compressor (20) being turned off.

## Ansprüche

1. Vorrichtung zum Steuern der Kapazität eines Kompressors (20) variabler Kapazität mit einem Verdampfer und einer Einrichtung (41) zum Ändern der Kompressorkapazität (24), mit : einer ersten Temperaturerfassungseinrichtung (43) benachbart zu dem Verdampfereinlaß zum Erfassen einer ersten Lufttemperatur (B) an einer Auslaßseite des Verdampfers ;

einer zweiten Temperaturerfassungseinrichtung (42) zum Erfassen einer zweiten Lufttemperatur (A) an einer Auslaßseite des Verdampfers ;

einer zum Erfassen einer dritten Lufttemperatur (C) außerhalb eines Abteiles vorgesehenen dritten Temperaturerfassungseinrichtung (44) ; und

einer Steuereinrichtung (40) zum Steuern der Einrichtung (41) zum Ändern der Kapazität, wobei die Steuereinrichtung aufweist eine erste Vergleichseinrichtung (53) zum Vergleichen einer ersten vorbestimmten Vergleichstemperatur (I) mit der dritten Lufttemperatur (C) und zum Vorsehen eines ersten Steuersignales, wenn die dritte Lufttemperatur (C) höher als die erste vorbestimmte Vergleichstemperatur (I) ist, wobei die Einrichtung (41) zum Ändern der Kapazität die Kapazität des Kompressors zu einer großen Kapazität (54) als Reaktion auf das erste Steuersignal ändert,

eine zweite Vergleichseinrichtung (66) zum Vergleichen einer zweiten vorbestimmten Temperatur (Ta) mit der zweiten Lufttemperatur (A) als Reaktion auf den Vergleich durch die erste Vergleichseinrichtung (53) und die Abwesenheit des ersten Steuersignales, wobei die zweite Vergleichseinrichtung (66) ein zweites Steuersignal vorsieht, wenn die zweite Lufttemperatur (A) höher als die erste vorbestimmte Temperatur (Ta) ist, die Einrichtung (41) zum Ändern der Kapazität als Reaktion auf das zweite Steuersignal die Kapazität des Kompressors zu einer großen Kapazität (54) ändert und die Einrichtung (41) zum Ändern der Kapazität in Abwesenheit des zweiten Steuersignales die Kapazität des Kompressors zu einer kleinen Kapazität (61) ändert,

eine dritte Vergleichseinrichtung (55) zum Vergleichen einer zweiten vorbestimmten Temperatur (Tb) mit der zweiten Lufttemperatur (A) und Vorsehen eines dritten Steuersignales, wenn die zweite Lufttemperatur höher als die zweite vorbestimmte Temperatur (Tb) ist, wobei die Einrichtung (41) zum Ändern der Kapazität die Kompressorkapazität zu einer kleinen Kapazität (61) in Abwesenheit des dritten Steuersignales ändert,

eine vierte Vergleichseinrichtung (56) zum Vergleichen einer zweiten vorbestimmten Vergleichstemperatur (II) mit der dritten Lufttemperatur (C) als Reaktion auf den Vergleich durch die dritte Vergleichseinrichtung (55) und die Anwesenheit des dritten Steuersignales und zum Vorsehen eines vierten Steuersignales, wenn die dritte Lufttemperatur (C) höher als die zweite vorbestimmte Vergleichstemperatur (II) ist, wobei als Reaktion auf das vierte Steuersignal eine dritte (Tc) und eine vierte (Td) vorbestimmte Temperatur gesetzt werden und in der Abwesenheit des vierten Steuersignales eine fünfte vorbestimmte Temperatur (Tc') gesetzt ist, die ein erhöhter Wert der dritten vorbestimmten Temperatur (Tc) ist und eine sechste vorbestimmte Temperatur (Td') gesetzt ist, die ein erhöhter Wert der vierten vorbestimmten Temperatur (Td) ist, eine fünfte Vergleichseinrichtung (58) zum Vergleichen der ersten vorbestimmten Temperatur (Ta) mit der zweiten Lufttemperatur (A) und Vorsehen eines fünften Steuersignales, wenn die zweite Lufttemperatur (A) höher als die erste vorbestimmte Temperatur (Ta) ist,

eine sechste Vergleichseinrichtung (59) zum Vergleichen der dritten vorbestimmten Temperatur (Tc) mit der ersten Lufttemperatur (B) als Reaktion auf den Vergleich durch die fünfte Vergleichseinrichtung (58) und die Abwesenheit des fünften Steuersignales, wobei die sechste Vergleichseinrichtung (59) ein sechstes Steuersignal vorsieht, wenn die dritte vorbestimmte Temperatur (Tc) höher als die erste Lufttemperatur (B) ist, eine siebente Vergleichseinrichtung (60) zum Vergleichen der vierten vorbestimmten Temperatur (Td) mit der ersten Lufttemperatur (B) als Reaktion auf den Vergleich durch die sechste Vergleichseinrichtung (59) und die Anwesenheit des sechsten Steuersignales, wobei die siebente Vergleichseinrichtung (60) ein siebentes Steuersignal vorsieht, wenn die erste Lufttemperatur (B) höher als die vierte vorbestimmte Temperatur (Td) ist, wobei die Einrichtung (41) zum Ändern der Kapazität die Kompressorkapazität zu einer kleinen Kapazität (61) in der Abwesenheit des siebenten Steuersignales ändert, eine achte Vergleichseinrichtung (62) zum Vergleichen einer achten vorbestimmten Temperatur (Tf) mit der ersten Lufttemperatur (B) und Vorsehen eines achten Steuersignales, wenn die erste Lufttemperatur (B) höher als die achte vorbestimmte Temperatur (Tf) ist, wobei der Kompressor (20) bei der Abwesenheit des achten Steuersignales abgeschaltet wird, und

eine neunte Vergleichseinrichtung (64) zum Vergleichen einer siebenten vorbestimmten Temperatur (Te) mit der ersten Lufttemperatur (B) als Reaktion auf den Vergleich durch die achte Vergleichseinrichtung (64) und die Abwesenheit des achten Steuersignales, wobei die neunte Vergleichseinrichtung (64) ein neuntes Steuersignal vorsieht, wenn die erste Lufttemperatur (B) höher als die siebente vorbestimmte Temperatur (Te) ist, wobei bei der Anwesenheit des neunten Steuersignales der Kompressor (20) eingeschaltet wird und bei der Abwesenheit des neunten Steuersignales der Kompressor (20) abgeschaltet wird.

2. Vorrichtung nach Anspruch 1, bei der die Steuereinrichtung weiterhin eine Bestimmungseinrichtung (69) zum Bestimmen, ob der Kompressor (20) als Reaktion auf den Vergleich durch die achte Vergleichseinrichtung (63) und der Anwesenheit des achten Steuersignales bei einer kleinen Kapazität betrieben wird, wobei die Bestimmungseinrichtung ein zehntes Steuersignal vorsieht, wenn der Kompressor (20) mit einer kleinen Kapazität betrieben wird.

3. Vorrichtung nach Anspruch 2, bei der als Reaktion auf die Bestimmung durch die Bestimmungseinrichtung (69) und die Anwesenheit des zehnten Steuersignales die erste Vergleichseinrichtung (53) so gesteuert ist, daß sie den Vergleich zwischen der ersten vorbestimmten Vergleichstemperatur (I) und der dritten Lufttemperatur (C) durchführt.

4. Vorrichtung nach Anspruch 2, bei der als Reaktion auf die Bestimmung durch die Bestimmungseinrichtung (69) und die Abwesenheit des zehnten Steuersignales die dritte Vergleichseinrichtung (55) so gesteuert ist, daß sie den Vergleich zwischen der zweiten vorbestimmten Temperatur (Tb) und der zweiten Lufttemperatur (A) durchführt.

5. Vorrichtung nach Anspruch 1, bei der als Reaktion auf den Vergleich durch die fünfte Vergleichseinrichtung (58) und die Anwesenheit des fünften Steuersignales die achte Vergleichseinrichtung (62) so gesteuert ist, daß sie den Vergleich zwischen der achten vorbestimmten Temperatur (Tf) und der ersten Lufttemperatur (B) durchführt.

6. Vorrichtung nach Anspruch 1, bei der als Reaktion auf den Vergleich durch die sechste Vergleichseinrichtung (59) und die Abwesenheit des sechsten Steuersignales die erte Vergleichseinrichtung (53) so gesteuert ist, daß sie den Vergleich zwischen der ersten vorbestimmten Vergleichstemperatur (I) und der dritten Lufttemperatur (C) durchführt.

7. Vorrichtung nach Anspruch 1, bei der als Reaktion auf den Vergleich durch die siebente Vergleichseinrichtung (60) und die Anwesenheit des siebenten Steuersignales die dritte Vergleichseinrichtung (55) so gesteuert ist, daß sie den Vergleich zwischen der zweiten vorbestimmten Temperatur (Tb) und der zweiten Lufttemperatur (A) durchführt.

8. Vorrichtung nach Anspruch 1, bei der als Reaktion auf den Vergleich durch die neunte Vergleichseinrichtung (64) und die Anwesenheit des neunten Steuersignales die dritte Vergleichseinrichtung (55) so gesteuert ist, daß sie den Vergleich zwischen der zweiten vorbestimmten Temperatur (Tb) und der zweiten Lufttemperatur (A) durchführt.

9. Verfahren zum Steuern der Kapazität eines Kompressors (20) variabler Kapazität mit einem Verdampfer (24) und einer Einrichtung (41) zum Ändern der Kompressorkapazität unter Benutzung der Vorrichtung nach Anspruch 1, wobei das Verfahren aufweist: Vergleichen in der ersten Vergleichseinrichtung (53) einer ersten vorbestimmten Vergleichstemperatur (I) mit der dritten Lufttemperatur (C) und Vorsehen eines ersten Steuersignales, wenn die dritte Lufttemperatur (C) höher als die erste vorbestimmte Vergleichstemperatur (I) ist, wobei die Einrichtung (41) zum Ändern der Kapazität die Kompressorkapazität zu einer großen Kapazität (54) als Reaktion auf das erste Steuersignal ändert,

Vergleichen in der zweiten Vergleichseinrichtung (66) einer ersten vorbestimmten Temperatur (Ta) mit der zweiten Lufttemperatur (A) als Reaktion auf den Vergleich durch die erste Vergleichseinrichtung (53) und die Abwesenheit des ersten Steuersignales, wobei die zweite Vergleichseinrichtung (66) ein zweites Steuersignal vorsieht, wenn die zweite Lufttemperatur (A) höher als die erste vorbestimmte Temperatur (Ta) ist, die Einrichtung (41) zum Ändern der Kapazität als Reaktion auf das zweite Steuersignal die Kompressorkapazität zu einer großen Kapazität (54) ändert und die Einrichtung (41) zum Ändern der Kapazität bei Abwesenheit des zweiten Steuersignales die Kompressorkapazität zu einer kleinen Kapazität (61) ändert,

Vergleichen in der dritten Vergleichseinrichtung (55) einer zweiten vorbestimmten Temperatur (Tb) mit der zweiten Lufttemperatur (A) und Vorsehen eines dritten Steuersignales, wenn die zweite Lufttemperatur (A) höher als die zweite vorbestimmte Temperatur (Tb) ist, wobei die Einrichtung (41) zum Ändern der Kapazität die Kompressorkapazität zu einer kleinen Kapazität (61) in der Abwesenheit des dritten Steuersignales ändert, Vergleichen in der vierten Vergleichseinrichtung (56) einer zweiten vorbestimmten Vergleichstemperatur (II) mit der dritten Lufttemperatur (C) als Reaktion auf den Vergleich durch die dritte Vergleichseinrichtung (55) und der Anwesenheit des dritten Steuersignales und zum Vorsehen eines vierten Steuersignales, wenn die dritte Lufttemperatur (C) höher als die zweite vorbestimmte Vergleichstemperatur (II) ist, wobei als Reaktion auf das vierte Steuersignal eine dritte (Tc) und eine vierte (Td) vorbestimmte Temperatur gesetzt werden und in der Abwesenheit des vierten Steuersignales eine fünfte vorbestimmte Temperatur (Tc') gesetzt wird, die einen erhöhten Wert der dritten vorbestimmten Temperatur (Tc) darstellt, und eine sechste vorbestimmte Temperatur (Td') gesetzt wird, die einen erhöhten Wert der vierten vorbestimmten Temperatur (Td) darstellt,

Vergleichen in der fünften Vergleichseinrichtung (58) der ersten vorbestimmten Temperatur (Ta) mit der zweiten Lufttemperatur (A) und Vorsehen eines fünften Steuersignales, wenn die zweite Lufttemperatur (A) höher als die erste vorbestimmte Temperatur (Ta) ist,

Vergleichen in der sechsten Vergleichseinrichtung (59) der dritten vorbestimmten Temperatur (Tc) mit der ersten Lufttemperatur (B) als Reaktion auf den Vergleich durch die fünfte Vergleichseinrichtung (58) und die Abwesenheit des fünften Steuersignales, wobei die sechste Vergleichseinrichtung (59) ein sechstes Steuersignal vorsieht, wenn die dritte vorbestimmte Temperatur (Tc) höher als die erste Lufttemperatur (B) ist, Vergleichen in der siebenten Vergleichseinrichtung (60) der vierten vorbestimmten Temperatur (Td) mit der ersten Lufttemperatur (B) als Reaktion auf den Vergleich durch die sechste Vergleichseinrichtung (59) und die Anwesenheit des sechsten Steuersignales, wobei die siebente Vergleichseinrichtung (60) ein siebentes Steuersignal vorsieht, wenn die erste Lufttemperatur (B) höher als die vierte vorbestimmte Temperatur (Td) ist, wobei die Einrichtung (41) zum Ändern der Kapazität die Kompressorkapazität zu einer kleinen Kapazität (61) bei der Abwesenheit des siebenten Steuersignales ändert,

Vergleichen in der achten Vergleichseinrichtung (62) einer achten vorbestimmten Temperatur (Tf) mit der ersten Lufttemperatur (B) und Vorsehen eines achten Steuersignales, wenn die erste Lufttemperatur (B) höher als die achte vorbestimmte Temperatur (Tf) ist, wobei der Kompressor (20) bei der Abwesenheit des achten Steuersignales abgeschaltet wird, und Vergleichen in der neunten Vergleichseinrichtung (64) einer siebenten vorbestimmten Temperatur (Te) mit der ersten Lufttemperatur (B) als Reaktion auf den Vergleich durch die achte Vergleichseinrichtung (64) und die Abwesenheit des achten Steuersignales, wobei die neunte Vergleichseinrichtung (64) ein neuntes Steuersignal vorsieht, wenn die erste Lufttemperatur (B) höher als die siebente vorbestimmte Temperatur (Te) ist, bei der Anwesenheit des neunten Steuersignales der Kompressor (20) eingeschaltet wird und bei der Abwesenheit des neunten Steuersignales der Kompressor (20) abgeschaltet wird.

**Revendications**

1. Dispositif pour la commande de capacité d'un compresseur à capacité variable (20) comportant un évaporateur (24) et des moyens de changement de capacité de compresseur (41), ce dispositif comprenant :

  – des premiers moyens de détection de température (43) placés au voisinage de l'entrée de l'évaporateur pour détecter une première température d'air (B) du côté sortie de l'évaporateur ;

  – des seconds moyens de détection de température (42) pour détecter une seconde température d'air (A) du côté sortie de l'évaporateur ;

  – des troisièmes moyens de détection de température (44) montés pour détecter une troisième température d'air (C) à l'extérieur d'une cabine ; et

  – des moyens de commande (40) pour commander les moyens de changement de capacité (41), ces moyens de commande comprenant :

  – des premiers moyens de comparaison (53) pour comparer une première température de comparaison prédéterminée (I) à la troisième température d'air (C) et pour fournir un premier signal de commande lorsque la troisième température d'air (C) est supérieure à la première température de comparaison prédéterminée (I), les moyens de changement de capacité (41) changeant la capacité du compresseur pour la faire passer en grande capacité (54) en réponse au premier signal de commande,

  – des seconds moyens de comparaison (66) pour comparer une première température prédéterminée (Ta) à la seconde température d'air (A) en réponse à la comparaison effectuée par les premiers moyens de comparaison (53) et à l'absence du premier signal de commande, les seconds moyens de comparaison (66) fournissant un second signal de commande lorsque la seconde température d'air (A) est supérieure à la première température prédéterminée (Ta), les moyens de changement de capacité (41) changeant la capacité du compresseur pour la faire passer en grande capacité (54) en réponse au second signal de commande, et les moyens de changement de capacité (41) changeant la capacité du compresseur pour la faire passer en petite capacité (61) en l'absence du second signal de commande,

  – des troisièmes moyens de comparaison (55) pour comparer une seconde température prédéterminée (Tb) à la seconde température d'air (A) et pour fournir un troisième signal de commande lorsque la seconde température d'air (A) est supérieure à la seconde température prédéterminée (Tb), les moyens de changement de capacité (41) changeant la capacité du compresseur pour la faire passer en petite capacité (61) en l'absence du troisième signal de commande,

  – des quatrièmes moyens de comparaison (56) pour comparer une seconde température de comparaison prédéterminée (II) à la troisième température d'air (C) en réponse à la comparaison effectuée par les troisièmes moyens de comparaison (55) et en présence du troisième signal de commande, ces moyens fournissant un quatrième signal de commande lorsque la troisième température d'air (C) est supérieure à la seconde température de comparaison prédéterminée (II), une troisième température prédéterminée (Tc) et une quatrième température prédéterminée (Td) étant réglées en réponse au quatrième signal de commande, une cinquième température prédéterminée (Tc') étant réglée en l'absence du quatrième signal de commande, cette cinquième température prédéterminée étant constituée par une valeur augmentée de la troisième température prédéterminée (Tc), et une sixième température prédéterminée (Td') étant réglée, cette sixième température prédéterminée étant constituée par une valeur augmentée de la quatrième température prédéterminée (Td),

  – des cinquièmes moyens de comparaison (58) pour comparer la première température prédéterminée (Ta) à la seconde température d'air (A) et pour fournir un cinquième signal de commande lorsque la seconde température d'air (A) est supérieure à la première température prédéterminée (Ta),

  – des sixièmes moyens de comparaison (59) pour comparer la troisième température prédéterminée (Tc) à la première température d'air (B) en réponse à la comparaison effectuée par les cinquièmes moyens de comparaison (58) et à l'absence du cinquième signal de commande, les sixièmes moyens de comparaison (59) fournissant un sixième signal de commande lorsque la troisième température prédéterminée (Tc) est supérieure à la première température d'air (B),

  – des septièmes moyens de comparaison (60) pour comparer la quatrième température prédéterminée (Td) à la première température d'air (B) en réponse à la comparaison effectuée par les sixièmes moyens de comparaison (59) et à la présence du sixième signal de commande, les septièmes moyens de comparaison (60) fournissant un septième signal de commande lorsque la première température d'air (B) est supérieure à la quatrième température prédéterminée (Td), les moyens de changement de capacité (41) changeant la capacité du compresseur pour le faire passer en petite capacité (61) en l'absence du septième signal de commande,

  – des huitièmes moyens de comparaison (62) comparant une huitième température prédéterminée (Tf) à la première d'air (B) et fournissant un huitième signal de commande lorsque la première température d'air (B) est supérieure à la huitième température prédéterminée (Tf), le compresseur (20) étant coupé en l'absence du huitième signal de commande, et

  – des neuvièmes moyens de comparaison (64) comparant une septième température prédéterminée (Te) à la première température d'air (B) en réponse à la comparaison effectuée par les huitièmes moyens de comparaison (64) et à l'absence du huitième signal de commande, les neuvièmes moyens de comparaison (64) fournissant un neuvième signal de commande lorsque la première température d'air (B) est supérieure à la septième température prédéterminée (Te), le compresseur (20) étant mis en marche en présence du neuvième signal de commande et ce compresseur (20) étant coupé en l'absence du neuvième signal de commande.

2. Dispositif selon la revendication 1, caractérisé en ce que les moyens de commande comprenant en outre des moyens de détermination (69) pour déterminer si le compresseur (20) fonctionne avec une petite capacité en réponse à la comparaison effectuée par les huitièmes moyens de comparaison (63) et à la présence du huitième signal de commande, les moyens de détermination fournissant un dixième signal de commande lorsque le compresseur (20) fonctionne avec une petite capacité.

3. Dispositif selon la revendication 1, caractérisé en ce que, en réponse à la détermination effectuée par les moyens de détermination (69) et à la présence du dixième signal de commande, les premiers moyens de comparaison (53) sont commandés de manière à effectuer la comparaison entre la première température de comparaison prédéterminée (I) et la troisième température d'air (C).

4. Dispositif selon la revendication 2, caractérisé en ce que, en réponse à la détermination effectuée par les moyens de détermination (69) et à l'absence du dixième signal de commande, les troisièmes moyens de comparaison (55) sont commandés pour effectuer la comparaison entre la seconde température prédéterminée (Tb) et la seconde température d'air (A).

5. Dispositif selon la revendication 1, caractérisé en ce que, en réponse à la comparaison effectuée par les cinquièmes moyens de comparaison (58) et à la présence du cinquième signal de commande, les huitièmes moyens de comparaison (62) sont commandés pour effectuer la comparaison entre la huitième température prédéterminée (Tf) et la première température d'air (B).

6. Dispositif selon la revendication 1, caractérisé en ce que, en réponse à la comparaison effectuée par les sixièmes moyens de comparaison (59) et à l'absence du sixième signal de commande, les premiers moyens de comparaison (53) sont commandés pour effectuer la comparaison entre la première température de comparaison prédéterminée (I) et la troisième température d'air (C).

7. Dispositif selon la revendication 1, caractérisé en ce que, en réponse à la comparaison effectuée par les septièmes moyens de comparaison (60) et à la présence du septième signal de commande, les troisièmes moyens de comparaison (55) sont commandés pour effectuer la comparaison entre la seconde température prédéterminée (Tb) et la seconde température d'air (A).

8. Dispositif selon la revendication 1, caractérisé en ce que, en réponse à la comparaison effectuée par les neuvièmes moyens de comparaison (64) et à la présence du neuvième signal de commande, les troisièmes moyens de comparaison (55) sont commandés pour effectuer la comparaison entre la seconde température prédéterminée (Tb) et la seconde température d'air (A).

9. Procédé pour la commande d'un compresseur à capacité variable (20) comportant un évaporateur (24) et des moyens de changement de capacité de compresseur (41), utilisant un dispositif selon la revendication 1, procédé caractérisé en ce qu'il consiste à :

– comparer dans les premiers moyens de comparaison (53) une première température de comparaison prédéterminée (I) à la troisième température d'air (C) et fournir un premier signal de commande lorsque la troisième température d'air (C) est supérieure à la première température de comparaison prédéterminée (I), les moyens de changement de capacité (41) changeant la capacité du compresseur pour le faire passer en grande capacité (54) en réponse au premier signal de commande,

– comparer dans les seconds moyens de comparaison (66) une première température prédéterminée (Ta) à la seconde température d'air (A) en réponse à la comparaison effectuée par les premiers moyens de comparaison (53) et à l'absence du premier signal de commande, les seconds moyens de comparaison (66) fournissant un second signal de commande lorsque la seconde température d'air (A) est supérieure à la première température prédéterminée (Ta), les moyens de changement de capacité (41) changeant la capacité du compresseur pour le faire passer en grande capacité (54) en réponse au second signal de commande, et les moyens de changement de capacité (41) changeant la capacité du compresseur pour le faire passer en petite capacité (61) en l'absence du second signal de commande,

– comparer dans les troisièmes moyens de comparaison (55) une seconde température prédéterminée (Tb) à la seconde température d'air (A) et fournir un troisième signal de commande lorsque la seconde température d'air (A) est supérieure à la seconde température prédéterminée (Tb), les moyens de changement de capacité (41) changeant la capacité du compresseur pour le faire passer en petite capacité (61) en l'absence du troisième signal de commande,

– comparer, dans les quatrièmes moyens de comparaison (56), une seconde température de comparaison prédéterminée (II) à la troisième température d'air (C) en réponse à la comparaison effectuée par les troisièmes moyens de comparaison (55) et à la présence du troisième signal de commande, et fournir un quatrième signal de commande lorsque la troisième température d'air (C) est supérieure à la seconde température de comparaison prédéterminée (II), une troisième température prédéterminée (Tc) et une quatrième température prédéterminée (Td) étant réglées en réponse au quatrième signal de commande, une cinquième température prédéterminée (Tc') étant réglée en l'absence du quatrième signal de commande, cette cinquième température étant constituée par une valeur augmentée de la troisième température prédéterminée (Tc), et une sixième température prédéterminée (Td') étant réglée, cette sixième température étant constituée par une valeur augmentée de la quatrième température prédéterminée (Td),

- comparer, dans les cinquièmes moyens de comparaison (58) la première température prédéterminée (Ta) à la seconde température d'air (A) et fournir un cinquième signal de commande lorsque la seconde température d'air (A) est supérieure à la première température prédéterminée (Ta),

- comparer, dans les sixièmes moyens de comparaison (59) la troisième température prédéterminée (Tc) à la première température d'air (B) en réponse à la comparaison effectuée par les cinquièmes moyens de comparaison (58) et à l'absence du cinquième signal de commande, les sixièmes moyens de comparaison (59) fournissant un sixième signal de commande lorsque la troisième température prédéterminée (Tc) est supérieure à la première température d'air (B),

- comparer, dans les septièmes moyens de comparaison (60) la quatrième température prédéterminée (Td) à la première température d'air (B) en réponse à la comparaison effectuée par les sixièmes moyens de comparaison (59) et à la présence du sixième signal de commande, les septièmes moyens de comparaison (60) fournissant un septième signal de commande lorsque la première température d'air (B) est supérieure à la quatrième température prédéterminée (Td), les moyens de changement de capacité (41) changeant la capacité du compresseur pour le faire passer en petite capacité (61) en l'absence du septième signal de commande,

- comparer, dans les huitièmes moyens de comparaison (62) une huitième température prédéterminée (Tf) à la première température d'air (B) et fournir un huitième signal de commande lorsque la première température d'air (B) est supérieure à la huitième température prédéterminée (Tf), le compresseur (20) étant coupé en l'absence du huitième signal de commande, et

- comparer, dans les neuvièmes moyens de comparaison (64) une septième température prédéterminée (Te) à la première température d'air (B) en réponse à la comparaison effectuée par les huitièmes moyens de comparaison (64) et à l'absence du huitième signal de commande, les neuvièmes moyens de comparaison (64) fournissant un neuvième signal de commande lorsque la première température d'air (B) est supérieure à la septième température prédéterminée (Te), le compresseur (20) étant mis en marche en présence du neuvième signal de commande et ce compresseur (20) étant coupé en l'absence du neuvième signal de commande.

Fig. 1

Fig. 2

**AIR TEMPERATURE**

THE TEMPERATURE AT THE INLET SIDE
OF THE EVAPORATOR

THE TEMPERATURE AT THE OUTSIDE
OF A COMPARTMENT

THE TEMPERATURE AT THE OUTLET SIDE
OF THE EVAPORATOR

HOUR

COMP. VOLU.   SMALL    SMALL    SMALL

COMP. STOP    COMP. STOP

Fig. 3

14

START — 50

51 — SMALL CAPACITY

52 — TIME > T — NO

YES

53 — C > I — NO — 66 — A > Ta — NO

YES

54 — LARGE VOLUME

55 — A > Tb — NO

YES

56 — C > I — NO — 67 — $Tc' = Tc + \Delta T, \ Td' = Td + \Delta T$ — 68 — $Tc = Tc', \ Td = Td'$

YES

57 — Tc , Td

58 — A > Td — NO

YES

59 — B < Tc — NO

YES

60 — B > Td — NO — 61 — SMALL VOLUME — 62 — B > Tf — YES — 69 — SMALL VOLUME — NO

YES — NO

63 — COMP. STOP

65 — COMP. ROTATE — YES — 64 — B > Te — NO

Fig. 4